# EUROPEAN PATENT SPECIFICATION

(11) **EP 1 459 470 B1**
(45) Date of publication and mention of the grant of the patent: **09.08.2006**
(21) Application number: 02774693.2
(22) Date of filing: 07.10.2002
(51) Int. Cl.: H04L 1/18

(54) **PACKET DATA RE-TRANSMISSION WITH SEPARATE RETRANSMISSION TRANSMITTER**
PAKETDATENWIEDERÜBERTRAGUNG MIT GETRENNTEM PAKETWIEDERÜBERTRAGUNGSSENDER
RETRANSMISSION DE DONNEES EN PAQUETS AVEC UN EMETTEUR DE RETRANSMISSION SEPAREE

(30) Priority: 20.12.2001 GB 0131109
(43) Date of publication of application: 22.09.2004
(73) Proprietor: MOTOROLA, INC., Schaumburg, IL 60196 (US)
(72) Inventor: LOPES, Luis, Schaumburg, IL 60196 (US)
(74) Representative: Jepsen, René Pihl
(86) International application number: PCT/EP2002/011277
(87) International publication number: WO 2003/055124

(56) References cited:
- EP-A- 0 735 701
- EP-A- 0 938 207
- US-A- 5 966 384
- US-A- 6 101 168
- US-A1- 2002 071 407
- CHO S: "RATE-ADAPTIVE ERROR CONTROL FOR MULTIMEDIA MULTICAST SERVICES IN SATELLITE-TERRESTRIAL HYBRID NETWORKS" ICC 2000. 2000 IEEE INTERNATIONAL CONFERENCE ON COMMUNICATIONS. CONFERENCE RECORD. NEW ORLEANS, LA, JUNE 18-21, 2000, IEEE INTERNATIONAL CONFERENCE ON COMMUNICATIONS, NEW YORK, NY: IEEE, US, vol. 1 OF 3, 18 June 2000 (2000-06-18), pages 446-450, XP001042987 ISBN: 0-7803-6284-5

## Description

This invention relates to the transmission and re-transmission of data packets in communication systems. The invention is applicable to, but not limited to, cellular radio communication systems.

In the field of this invention it is known that data, in the form of data packets, are transmitted across a digital communication network or system which consists of a number of individual links. Protocols are used to organise the transmission of data by means of a hierarchy of protocol layers. The hierarchy of layers typically extends from a physical layer (which dictates the manner in which individual bits are transmitted), through to an application layer, which determines, for example, how two high-level computer programs interact with each other.

An example of an intermediate layer is a link layer, which controls the transmission of data across a single organisational link in the network. The single organisational link at the link layer will often however correspond to multiple physical links in the physical layer. For example, in a cellular radio communication system according to the Universal Mobile Telephone Standard (UMTS), at the link layer a single organisational link exists between a Radio Network Controller (RNC),which includes a packet scheduler, and a user equipment (UE), such as a mobile telephone, whereas in the physical layer the physical connection is implemented by a first physical link from the RNC to an intermediate physical entity, namely a Node-B (UMTS terminology for a base transceiver station) and a second physical link from the Node-B to the UE. In the above example, the RNC may be known as the transmit-end (Tx-end) of the link layer, and the UE as the receive-end (Rx-end).

Within the link layer, a mechanism called Automatic Repeat Request (ARQ) provides an error control mechanism for data transmission that allows the Rx-end to periodically advise the Tx-end as to whether data packets have been received without error or not. This allows the Tx-end to retransmit any packets that were transmitted in error in the previous period.

The message sent by the Rx-end is known as an acknowledgement/negative acknowledgement (Ack/Nack). The Ack/Nack message contains the Ack/Nack state of the previous transmitted packet data units (PDU), also termed data packets or blocks, sent to the Rx-end by the Tx-end. On receiving the Ack/Nack message the Tx-end is able to retransmit those packets that were reported as being received in error (Nacked) by the Rx-end; typically the oldest Nacked PDU is retransmitted first. Transmission and retransmissions are scheduled by an RNC via a node B.

An example of a system using data receipt acknowledgement is discloses in United States Patent US 5 966 384. The document discloses data transmission to a remote unit using a supplemental high speed data channel.
If an interruption occurs, data communication will continue using a fundamental channel, if less than a predetermined amount of data remains to be transmitted.

In packet systems, system efficiency is obtained by setting the power or data rates at a level which may allow a measurable block error rate (e.g. in the region of 5-20%). In this way, minimum resource is utilised, and an ARQ protocol is used to reduce lost blocks to a very low number (or zero, depending on application delay). The penalty is some delay to the user, and additional use of radio resource.

The actual delay experienced depends on a number of factors such as the inherent delay in the ACK/NACK protocol, and the delay in signalling bad packets back to the RNC. This depends on the physical location of the RNC, and of course the retransmissions will then need to be rescheduled, with resulting further delay.

Thus, a retransmission procedure having as little delay as possible would advantageously result in a better quality of service for the user.

According to a first aspect, the present invention comprises a method for transmission of data packets to a user equipment in accordance with claim 1.

According to a second aspect, the present invention comprises a cellular communication system in accordance with claim 6.

The shared channel may be a wide area shared channel which has a coverage area equal to that of all node B's controlled by one RNC.

The shared channel is a spare carrier provided by the communication system or may be a separately provided broadcast channel detectable by the UE.

Preferably, the re-transmissions are transmitted from a packet retransmission unit (PRU), co-located with an RNC in order to reduce backhaul delay.

Hence, there are effectively two parallel systems. A high capacity cellular system is used for circuit switched data and initial transmissions of packet data. There are, in principle, no repeat transmissions on this system, in contrast with known arrangements. The second system consists of a lower capacity 'megacell' overlay used for retransmissions only.

An uplink ACK/NACK channel may also be provided between the UE and the PRU in which case, the PRU is provided with a receiver. This can be a low bandwidth channel. Alternatively, the ACK/NACK messages can be sent by the conventional method via a node B to the RNC.

In a CDMA (code division multiple access) system the low bandwidth uplink channel could be heavily coded and/or repeated to enable range extension for the UE. The raw signalling rate of such a channel could be quite low, basically comprising packet number and ACK/NACK indication for each packet received.

Advantageously, an ACK/NACK may be immediately sent on the uplink to the PRU as soon as the decoding process has been completed. The conventional route via the node B suffers from inherent delays as there is the need to share the channel with other signalling and circuit-switched data. To reduce bandwidth further, only NACKs are transmitted. This is possible because the RNC controls the time of transmission of the original packet, and it can therefore be assumed that the packet has been received correctly unless a NACK is received shortly afterwards.

Following reception of a NACK, the retransmission is scheduled by the RNC in the downlink wide area shared channel. The bandwidth provision in this channel should be chosen in order to enable short retransmission delays under normal conditions.

In this way, various delay components are reduced or eliminated. In the preferred embodiment, ACK/NACK signalling can be very fast and need not depend on e.g. polling by the network. The ACK/NACK is effectively sent directly to the RNC (via the PRU), which then schedules the packet immediately in a shared channel. This shared channel can be used quite efficiently since retransmission requests have high granularity (i.e. each packet is handled individually). There is no backhaul in either uplink signalling or downlink retransmission. Further, the shared downlink channel does not need to carry any additional signalling or circuit-switched data as does the downlink from a node B to a UE.

Since the retransmission load of a given node B is less than 10% of the total load (because of circuit data), it can be assumed that the wide area shared channel would require less than 10% of the spectrum available.

Embodiments of the present invention will now be described, by way of example only, with reference to the accompanying drawings, in which:
FIG. 1 is a schematic block diagram of components comprising a communications system capable of supporting the transmission and retransmission of data packets performed in accordance with the invention; and
FIG. 2 is a flowchart showing process steps employed in an embodiment of the present invention.

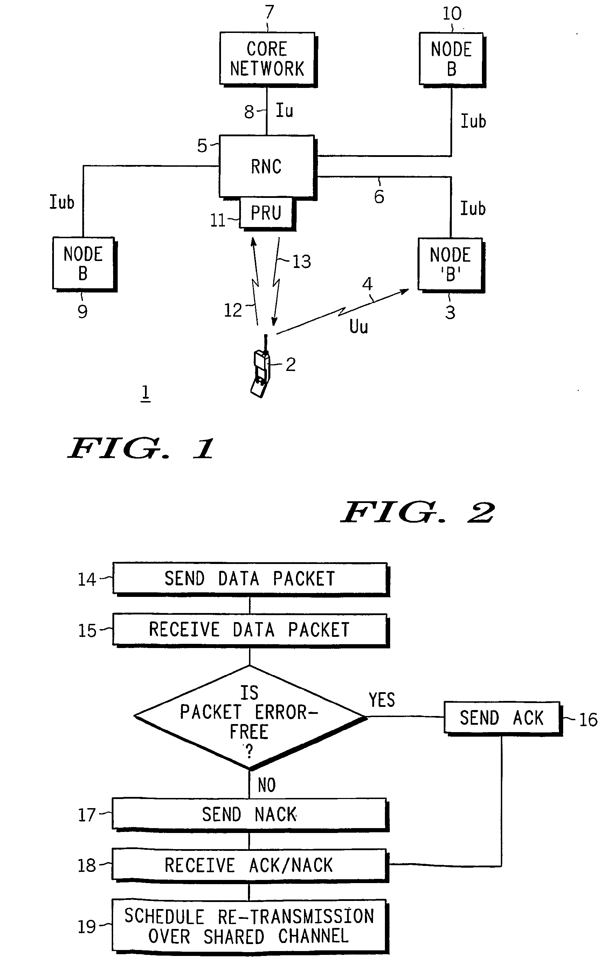

In the embodiment and with reference to Fig. 1, the communication system is a cellular communication system 1. A user equipment (UE) 2, e.g. a mobile telephone, for use by an end-user, is coupled with a base transceiver station, known in UMTS as a Node-B, 3, via a radio link 4 operating according to the UMTS-specified Uu interface. The Node-B 3 is coupled to a Radio Network Controller (RNC) 5 via a physical link (e.g. a landline) 6 operating according the UMTS-specified lub interface. The RNC 5 is coupled to a core network 7, e.g. the Internet, via a physical link (e.g. a landline) 8 operating according to the UMTS-specified lu interface.

Also under the control of the RNC 5 are the two other node B's 9, 10. Each of the node B's 3, 9 and 10 have a coverage area associated with them and serve user equipments located within their respective coverage areas.

A packet retransmission unit (PRU) 11 is co-located with the RNC 5 and is adapted to receive ACK/NACK messages from the UE 2 over a signalling uplink channel 12 and to re-tansmit data packets over a wide area shared downlink channel 13. The shared downlink channel 13 encompasses the total coverage areas of the node B's 3,9, 10.

There may be other user equipments comprising the communication system 1 and being served by any one of the node B's 3, 9, 10. These other user equipments (not shown) may also receive data packets from their serving node B (which have been scheduled by the RNC 5), and also, re-transmitted packets over the shared channel 13. They may also be configured to send ACK/NACK messages to the PRU II over the uplink channel 13.

With reference now to Fig. 2, a stream of data packets originating at the core network 12 and destined for the UE 2 is sent (step 14) over the lu interface 8 to the RNC 5. RNC 5 segments the stream to form data blocks. Transmission of the data blocks to the UE 2 via its serving node B 4 is scheduled by the RNC 5 in accordance with known procedures.

On receipt of a data packet at the UE 2,(step 15) if the packet is received without error, then an ACK message is sent (step 16) to the PRU 11 over the signalling (uplink) channel 12 which has previously been assigned by the RNC 5 to the UE 2. If on the other hand, the data packet is erroneously received, a NACK message is sent (step 17) instead.

At step 18 the RNC 5 receives the ACK or NACK message via the PRU 11. If a NACK message is received, then the RNC 5 schedules a re-transmission (step 19) of the data packet from the PRU 11 over the wide area shared channel 13.

Apparatus for implementing the above arrangement, and performing the method steps , may be provided by adapting conventional apparatus and/or providing additional modules. In particular, additional apparatus may be provided within the RNC 5. The apparatus may be in the form of hardware, firmware, or software, or a combination of these. The apparatus may comprise one or more processors, for implementing instructions and using data stored in a storage medium such as a computer disk or PROM.

It is within the contemplation of the invention that, in addition to UMTS systems, any other wireless communication system using re-transmission protocols, such as other wideband code division multiplex access (WCDMA) systems, General Packet Radio Service (GPRS), and Enhanced Data Rate for Global Evolution (EDGE) which encompasses Enhanced GPRS (EGPRS), would benefit from employing the inventive concepts described herein. For example, in a GPRS or EGPRS system, the above embodiments may be implemented in the same way as described above, except that, referring for example to FIG. 1, a GPRS base transceiver station (BTS) is used instead of the Node-B, a GPRS base station controller (BSC), comprising a packet control unit (PCU), is used instead of the RNC, and a Um interface and an Abis interface are used instead of the Uu interface and the lub interface respectively.

The invention is particularly useful for applications such as video or quick web sessions.

## Claims

1. A method for transmission of data packets to a user equipment in a cellular communications system (1) using a fundamental and supplemental channel, the method including the steps of;
on instruction from a controller (5),
transmitting (14) a data packet from a first transmitter (3) of a first plurality of transmitters, the first transmitter having an associated coverage area, to the user equipment (2) and each transmitter of the first plurality of transmitters having an associated coverage area,
if the data packet is erroneously received at the user equipment (2), sending (17) a negative acknowledgement message, hereafter referred to as NACK from the user equipment (2) to the controller (5),
the method further comprising the step of:
on receipt (18) of the NACK at the controller (5) and on instruction from the controller, retransmitting (19), from a second transmitter (11), the data packet to the user equipment over a downlink channel (13) shared between multiple user equipments, the downlink channel being a wide area downlink channel encompassing a total coverage area of the first plurality of transmitters.

2. A method according to claim 1 including the step of sending (16) an acknowledgement message, hereafter referred to as ACK if the data packet is received correctly.

3. A method according to either preceding claim including the further step of coding the NACK/ACK message prior to sending.

4. A method according to any preceding claim in which the NACK/ACK message comprises a packet identification number and a NACK/ACK indication for the packet received.

5. A method according to any preceding claim In which the NACK/ACK message is sent from the user equipment to the controller via a receiver co-located with the second transmitter.

6. A cellular communication system (1) comprising;
a controller (5);
a first transmitter (3), of a first plurality of transmitters, for transmitting a data packet from the first transmitter to a user equipment (2), the first transmitter (3) having an associated coverage area and each transmitter of the first plurality of transmitters having an associated coverage area;
the user equipment (2) being operable to, if the data packet is erroneously received at the user equipment, sending a negative acknowledgement message from the user equipment (2) to the controller,
the controller being operable to generate an instruction on receipt of the NACK,
the cellular communication system further comprising:
a second transmitter (11) operable, on receiving the instruction, to retransmit the data packet to the user equipment (2) over a downlink channel shared between multiple user equipments, the downlink channel being a wide area downlink channel encompassing a total coverage area of the first plurality of transmitters.

7. A cellular communication system according to Claim 6 and further including a receiver, co-located with the second transmitter for receiving (18) negative acknowledgement and acknowledgement messages from the user equipment (2).

8. A storage medium storing processor-implementable instructions for controlling a processor to carry out the method of any of claims 1 to 5.

## Patentansprüche

1. Verfahren zum Übertragen von Datenpaketen an eine Nutzereinrichtung in einem zellularen Kommunikationssystem (1) unter Verwendung eines Grund- und Zusatzkanals, wobei das Verfahren die Schritte umfasst:
Nach dem Instruieren durch einen Controller (5),
Übertragen (14) eines Datenpakets von einem ersten Sender (3) einer ersten Vielzahl an Sendern an eine Nutzereinrichtung (2), wobei der erste Sender einen zugehörigen Abdeckbereich hat, und wobei jeder Sender der ersten Vielzahl an Sendern einen zugehörigen Abdeckbereich hat,
wenn das Datenpaket fehlerhaft an der
Nutzereinrichtung (2) empfangen wird,
Senden (17) einer negativen Bestätigungsmitteilung, nachfolgend als NACK bezeichnet, von der Nutzereinrichtung (2) an den Controller (5),
wobei das Verfahren den weiteren Schritt umfasst:
nach dem Empfang (18) des NACK an dem Controller (5) und nach dem Instruieren durch den Controller, Übertragen (19), von einem zweiten Sender (11), des Datenpakets an die Nutzereinrichtung über einen Downlinkkanal (13), der von mehreren Nutzereinheiten gemeinsam verwendet wird, wobei der Downlinkkanal ein Großbereichs-Downlinkkanal ist, der einen gesamten Abdeckbereich der ersten Vielzahl an Sendern umfasst.

2. Verfahren gemäß Anspruch 1 umfassend den Schritt des Sendens (16) einer Bestätigungsmitteilung, nachfolgend als ACK bezeichnet, wenn das Datenpaket korrekt empfangen wurde.

3. Verfahren gemäß einem der vorhergehenden Ansprüche einschließlich des weiteren Schrittes des Codierens der NACK/ACK-Mitteilung vor dem Senden.

4. Verfahren gemäß einem der vorhergehenden Ansprüche, wobei die NACK/ACK-Mitteilung eine Paketidentifikationsnummer und eine NACK/ACK-Anzeige für das empfangene Paket umfasst.

5. Verfahren gemäß einem der vorhergehenden Ansprüche, wobei die NACK/ACK-Mitteilung von der Nutzereinrichtung an den Controller über einen Empfänger gesendet wird, der zusammen mit dem zweiten Sender angeordnet ist.

6. Zellulares Kommunikationssystem (1) mit:
einem Controller (5);
einem ersten Sender (3) einer ersten Vielzahl an Sendern zum Übertragen eines Datenpakets von dem ersten Sender an eine Nutzereinrichtung (2), wobei der erste Sender (3) einen zugehörigen Abdeckbereich aufweist und jeder Sender der ersten Vielzahl an Sendern einen zugehörigen Abdeckbereich hat;
wobei die Nutzereinrichtung (2) betreibbar ist, wenn das Datenpaket fehlerhaft an der Nutzereinrichtung empfangen wird, eine negative Bestätigungsmitteilung von der Nutzereinrichtung (2) an den Controller zu senden;
wobei der Controller betreibbar ist, eine Instruktion nach dem Empfang der NACK zu erzeugen;
wobei das zellulare Kommunikationssystem des Weiteren umfasst:
einen zweiten Sender (11) der betreibbar ist, nach dem Empfangen der Instruktion das Datenpaket an die Nutzereinrichtung (2) über einen Downlinkkanal erneut zu übertragen, der von mehreren Nutzereinrichtungen gemeinsam verwendet wird, wobei der Downlinkkanal ein Großbereichs-Downlinkkanal ist, der einen gesamten Abdeckbereich der ersten Vielzahl an Sendern umfasst.

7. Zellulares Kommunikationssystem gemäß Anspruch 6, des Weiteren mit einem Empfänger, der zusammen mit dem zweiten Sender zum Empfangen (18) von negativen Bestätigungsmitteilungen und Bestätigungsmitteilungen von der Nutzereinrichtung (2) angeordnet ist.

8. Speichermedium, welches prozessorumsetzbare Instruktionen zum Steuern eines Prozessors speichert, um das Verfahren gemäß einem der Ansprüche 1 bis 5 auszuführen.

## Revendications

1. Procédé pour la transmission de paquets de données à un équipement utilisateur dans un système de communication cellulaire (1), au moyen d'un canal fondamental et d'un canal supplémentaire, le procédé comprenant les étapes selon lesquelles :
sur instruction d'un contrôleur (5),
un premier émetteur (3) d'une première pluralité d'émetteurs, le premier émetteur ayant une zone de couverture associée, envoie (14) un paquet de données à l'équipement utilisateur (2) et à chaque émetteur de la première pluralité d'émetteurs, ayant une zone de couverture associée,
si le paquet de données est reçu d'une manière incorrecte par l'équipement utilisateur (2), l'équipement utilisateur (2) envoie (17) au contrôleur (5) un message d'acquittement négatif, que l'on appellera ci-après NACK,
le procédé comprenant, en outre, les étapes selon lesquelles :
lors de la réception (18) du NACK par le contrôleur (5) et sur instruction du contrôleur, un deuxième émetteur (11) renvoie (19) le paquet de données à l'équipement utilisateur, sur un canal descendant (13) partagé par plusieurs équipements utilisateurs, le canal descendant étant un canal descendant étendu englobant la zone de couverture totale de la première pluralité d'émetteurs.

2. Procédé selon la revendication 1, comprenant l'étape selon laquelle un message d'acquittement, que l'on appellera ci-après ACK, est envoyé (16) si le paquet de données est correctement reçu.

3. Procédé selon l'une ou l'autre des revendications précédentes, comprenant l'étape supplémentaire selon laquelle le message NACK/ACK est codé avant d'être envoyé.

4. Procédé selon l'une quelconque des revendications précédentes, dans lequel le message NACK/ACK comprend un numéro d'identification de paquet et une indication NACK/ACK pour le paquet reçu.

5. Procédé selon l'une quelconque des revendications précédentes, dans lequel le message NACK/ACK est envoyé au contrôleur par l'équipement utilisateur via un récepteur situé au même endroit que le deuxième émetteur.

6. Système de communication cellulaire (1), comprenant :
un contrôleur (5) ;
un premier émetteur (3), d'une première pluralité d'émetteurs, pour envoyer un paquet de données du premier émetteur à un équipement utilisateur (2), le premier émetteur (3) ayant une zone de couverture associée et chaque émetteur de la première pluralité d'émetteurs ayant une zone de couverture associée ;
l'équipement utilisateur (2) étant conçu pour envoyer un message d'acquittement négatif de l'équipement utilisateur (2) au contrôleur, si le paquet de données est reçu d'une manière incorrecte par l'équipement utilisateur ;
le contrôleur étant conçu pour générer une instruction lorsqu'il reçoit le NACK,
le système de communication cellulaire comprenant, en outre :
un deuxième émetteur (11) conçu pour, lorsqu'il reçoit l'instruction, renvoyer le paquet de données à l'équipement utilisateur (2) sur un canal descendant partagé par plusieurs équipements utilisateurs, le canal descendant étant un canal descendant étendu englobant la zone de couverture totale de la première pluralité d'émetteurs.

7. Système de communication cellulaire selon la revendication 6, et comprenant, en outre, un récepteur, situé au même endroit que le deuxième émetteur, pour recevoir (18) des messages d'acquittement négatif et d'acquittement en provenance de l'équipement utilisateur (2).

8. Support de stockage stockant des instructions pouvant être implémentées par un processeur, pour commander un processeur de façon qu'il exécute le procédé selon l'une quelconque des revendications 1 à 5.
